# EUROPEAN PATENT APPLICATION

(11) **EP 1 407 923 A1**
(43) Date of publication of application: **14.04.2004**
(21) Application number: 02730888.1
(22) Date of filing: 03.06.2002
(51) Int. Cl.: B60N 2/30, E05C 3/32

(54) **INERTIA LOCK DEVICE AND FOLDABLE SHEET**

(30) Priority: 11.06.2001 JP 2001175484
(71) Applicant: TS Tech Co., Ltd, Asaka-shi, Saitama 351-0012 (JP); Honda Giken Kogyo Kabushiki Kaisha, Minato-ku, Tokyo 107-0062 (JP)
(72) Inventor: KANEKO, Y., Technical Cntr, TS Tech Co., Ltd., Shioya-gun, Tochigi 329-1217 (JP); TAKAKURA, M., Kabushiki Kaisha Honda, Wako-shi, Saitama 351-0113 (JP); KAJIWARA, H., Kabushiki Kaisha Honda, Wako-shi, Saitama 351-0113 (JP); ITO, T., Kabushiki Kaisha Honda, Wako-shi, Saitama 351-0113 (JP); WAKU, S., Kabushiki Kaisha Honda, Wako-shi, Saitama 351-0113 (JP)
(74) Representative: McKelvey, Ian Edward
(86) International application number: PCT/JP2002/005454
(87) International publication number: WO 2002/100678

(57) **Abstract**

An inertia lock device comprising a receiving block (70) having a substantially U-shaped, obliquely upwardly opened receiving port (701a) for receiving the lower portion of a stand leg (1), a jaw portion (71c) projecting from a latch base (71a) to enter the receiving port through the bottom side thereof, a hook portion (71d) projecting from an upper arm (71b) into a bight, the lower side of the stand leg (1), which enters the receiving port (701a) of the receiving block (70), having a latch (71) that kicks the jaw portion (71c) to cause the hook portion (71d) to mesh with a receiving groove (91) in the stand leg (1) and pressingly holds the lower side of the stand leg (1) by the upper arm (71b), the latch (71) being eccentrically supported by a torsion coil spring (73), thereby reliably preventing the kick-up of a seat cushion (2) attending collision or the like.

## Description

### TECHNICAL FIELD

The present invention relates to an inertia locking system in which a latch is operated by a torsion coil spring due to an inertia force so as to press and hold a locked member when the locked member is brought into contact therewith, and an improvement of a collapsible seat provided with the inertia locking system.

### BACKGROUND ART

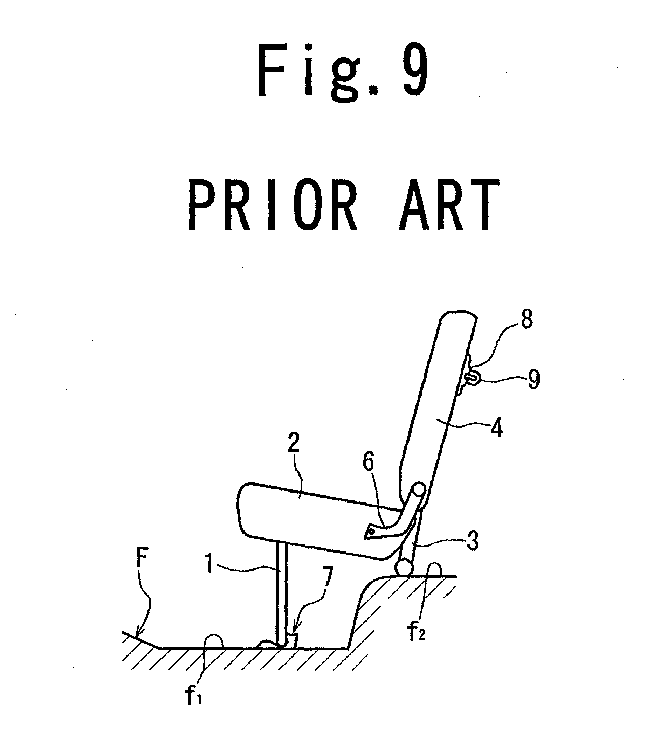

As a seat for a station wagon or the like, there is a seat which is provided with a seat cushion 2 having an upward substantially C-shaped stand leg portion 1 capable of being stood on a lower stage portion f₁ of a vehicle body floor F in a lower portion close to a front side as shown in Fig. 9, and a forward tiltable seat back 4 having a lower portion side pivoted and placed to an upper step portion f₂ of the vehicle body floor F by a bracket 3, axially supports and connects the seat cushion 2 to a portion close to a lower side of a side portion of the seat back 4 by a curved arm 6 extending to a rear portion side, and can kick up the seat cushion 2 including the leg portion 1 by the curved arm 6.

It is intended that the inertia locking system 7 pushing in a lower line portion of the stand leg portion 1 with respect to the collapsible seat so as to hold is mounted to the lower stage portion f₁ of the vehicle body floor F. In this case, the seat back 4 of the collapsible seat is provided with a stop ring lock 8 capable of performing a locking and unlocking operation in a back portion close to one side, is provided with a stop ring 9 so as to be protruded from a side panel of a vehicle body, and is structured such as to be capable of being vertically arranged by gripping and holding the stop ring 9 by the stop ring lock 8.

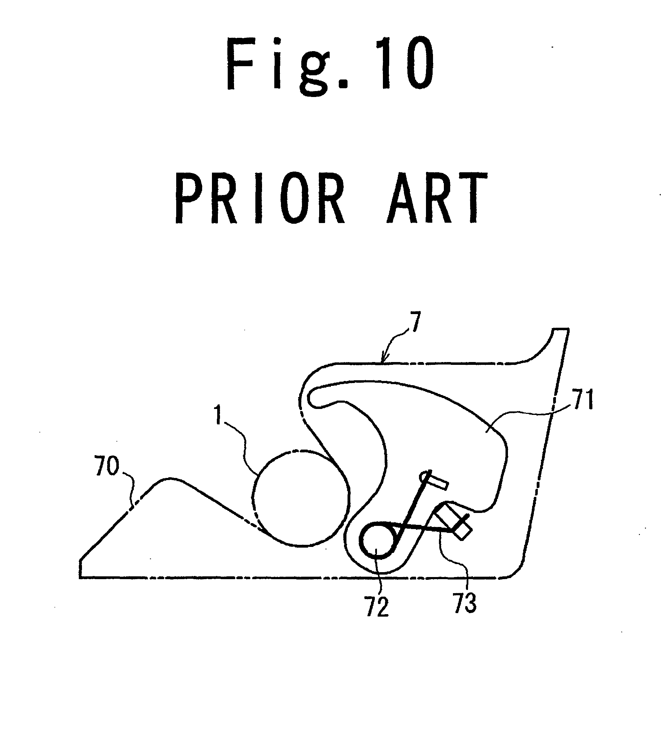

The inertia locking system 7 is provided with a pedestal 70 receiving the stand leg portion 1 by a substantially U-shaped receiving port, and a substantially reverse-J-shaped latch 71 pushing in and holding the lower line portion of the stand leg portion inserted to the receiving port of the pedestal 70 by an upper curved portion, as shown in Fig. 10, and is structured such that the latch 71 is pivoted to the pedestal 70 in a standing manner by a pivot pin 72 inserted to a portion close to a base portion of the latch, and a torsion coil spring 73 is arranged between the latch 71 and the pedestal 70 so as to be fitted onto an axis of the pivot pin 72.

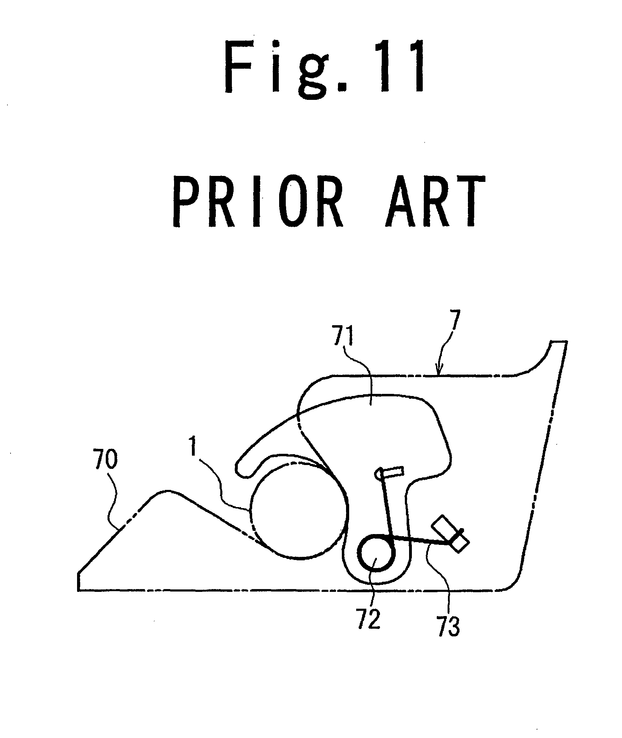

In the inertia locking system, for the reason of a troublesome operation of sequentially canceling the lock, the latch 71 is supported so as to be biased in a moving apart direction at the back of the receiving port of the pedestal 70 by the torsion coil spring 73 at a normal time. On the contrary, when an impact due to a collision or the like is applied, the latch 71 is operated by the torsion coil spring 73 in such a manner as to move a position of center of gravity obtained by a spring end of the torsion coil spring 73 to a front side on the basis of an inertia force, thereby pushing in and holding the lower line portion of the stand leg portion 1 by the latch 71, as shown in Fig. 11.

In the inertia locking system, since the latch 71 is operated after the inertia force due to the impact force caused by the collision or the like is applied, a lot of time is required until the latch 71 engages with the lower line portion of the stand leg portion 1. On the contrary, in the collapsible seat mentioned above, since an offset exists between a center of rotation given by a supporting shaft of the curved arm 6 and a center of gravity of the seat cushion 1, the rotational force by which the seat cushion 2 jumps up is generated, at a time when a sitting person does not exist, so that there is a risk that the operation of the latch 71 is delayed and the stand leg portion 1 can not be pushed in and held.

In addition, since the latch 71 is supported so as to be biased in the moving apart direction at the back of the receiving port of the pedestal 70 by the torsion coil spring 73 at the normal time, foreign materials and the like are attached around an axis of the pivot pin 72 accompanying with a long time use, so that there is a fear that it can not be known whether or not the latch 71 becomes in a state that it can not rotate.

An object of the present invention is to provide an inertia locking system which can securely grip and hold a locked member by a latch on the basis of a simple operation.

Further, another object of the present invention is to provide a collapsible seat which can securely prevent a seat cushion from being kicked up accompanying with a collision or the like by an inertia locking system.

### DISCLOSURE OF THE INVENTION

In an inertia locking system in accordance with the present invention, there is provided an inertia locking system comprising:
a pedestal in which a substantially U-shaped receiving port receiving a locked member is open toward an obliquely upper side;
a latch pushing in and holding the locked member inserted to the receiving port of the pedestal by an upper curved portion;
the latch being stood up from the pedestal and being pivoted to the pedestal by a pivot pin inserted to a portion close to a latch base portion;
a torsion coil spring arranged between the latch and the pedestal so as to be fitted onto an axis of the pivot pin; and
the latch being supported so as to be biased in a moving part direction at the back of the receiving port of the pedestal by the torsion coil spring,
wherein the apparatus is provided with a jaw portion projecting from the latch base portion so as to protrude from a bottom line of the receiving port within the receiving port, and a hook portion protruding from the upper curved portion to an inner side thereof, the locked member inserted to the receiving port of the pedestal kicks the jaw portion so as to engage the hook portion with a receiving groove of the locked member, and the latch pushing in and holding the locked member by the upper curved portion is provided, whereby the locked member can be securely and quickly locked with an inner portion of the receiving port.

In the inertia locking system, since the latch is frequently operated by providing with the latch engaging the hook portion with the receiving groove made of a sintered hard alloy and inserted and attached to the locked member, the structure is made such that a matter that the receiving groove is worn out is not generated because the receiving groove with which the latch is engaged is formed by the sintered hard alloy, even when the locked member is frequently attached to and detached from the receiving port.

Further, the structure is made such that an open port is aligned with the receiving port of the pedestal and a substantially Ω-shaped clip is provided in the pedestal, whereby a curl portion of the clip forms a guide so as to be capable of quickly guiding the locked member in the innermost recess of the receiving port.

Further, the structure is made such that a metal placing plate in which the latch is provided in a standing manner is set to the pedestal, a substantially U-shaped recess portion is provided as the receiving port for the locked member, the curl portion of the open port is exposed to an inner side rather than a slit in the recess portion so as to fix the clip to an inner side, the latch is protruded to an outer side from the slit, and a resin exterior packaging cover covering the placing plate is provided, whereby it is possible to stably place the apparatus itself, and it is possible to keep a whole appearance good.

In accordance with the present invention, there is provided a collapsible seat comprising:
a seat cushion provided with an upward substantially C-shaped stand leg portion capable of being stood on a lower stage portion surface of a vehicle body floor in a lower portion close to a front side;
a forward tiltable seat back having a lower portion side pivoted and placed to an upper step portion of the vehicle body floor;
the seat cushion being axially supported and connected to a portion close to a lower side of a side portion of the seat back by a bracket arm extending to a rear portion side; and
the seat cushion including the stand leg portion being provided so as to be capable of being jumped up by the bracket arm,
wherein the seat is provided with a pedestal in which a substantially U-shaped receiving port receiving a lower line portion of the stand leg portion is open toward an obliquely upper side, and an inertia locking system which is provided with a jaw portion projecting from the latch base portion so as to protrude from a bottom line of the receiving port within the receiving port, and a hook portion protruding from the upper curved portion to an inner side thereof, and in which the lower line portion of the stand leg portion inserted to the receiving port of the pedestal kicks the jaw portion so as to engage the hook portion with a receiving groove of the stand leg portion, and the latch pushing in and holding the lower line portion of the stand leg portion by the upper curved portion is provided, the latch is stood up from the pedestal and is pivoted to the pedestal by a pivot pin inserted to a portion close to a latch base portion, a torsion coil spring is arranged between the latch and the pedestal so as to be fitted onto an axis of the pivot pin, and the latch is supported so as to be biased in a moving part direction at the back of the receiving port of the pedestal by the torsion coil spring, is provided in a lower stage portion of the vehicle body floor, whereby the stand leg portion can be securely and quickly locked with an inner portion of the receiving port, and a whole of the seat can be prevented from being jumped up.

In the collapsible seat, since there is provided with the inertia locking system which is provided with the latch engaging the hook portion with the receiving groove made of a sintered hard alloy and inserted and attached to the lower line portion of the stand leg portion, the structure is made such that a matter that the receiving groove is worn out is not generated because the receiving groove with which the latch is engaged is formed by the sintered hard alloy, even when the stand leg portion is frequently attached to and detached from the receiving port.

Further, there is provided with the inertia locking system in which an open port is aligned with the receiving port of the pedestal and a substantially Ω-shaped clip is provided in the pedestal, whereby it is possible to quickly guide the lower line portion of the stand leg portion in the innermost recess of the receiving port.

Further, there is provided with the inertia locking system structured such that a metal placing plate in which the latch is provided in a standing manner is set to the pedestal, a substantially U-shaped recess portion is provided as the receiving port for the stand leg portion, there is provided with a resin exterior packaging cover in which the curl portion of the open port is exposed to an inner side rather than a slit in the recess portion so as to fix the clip to an inner side, the latch is protruded to an outer side from the slit of the exterior packaging cover, and the placing plate is covered by the exterior packaging cover, whereby it is possible to stably place the apparatus itself, and it is possible to keep a whole appearance good.

The other features than the features mentioned above will be apparent in an embodiment in accordance with the present invention described below.

### BRIEF DESCRIPTION OF THE DRAWINGS

Fig. 1 is a schematic view showing a collapsible seat corresponding to a particular embodiment provided with an inertia locking system in accordance with the present invention;
Fig. 2 is a schematic view showing a structure of the inertia locking system provided in the collapsible seat in Fig. 1;
Fig. 3 is a side cross sectional view showing an exterior packaging cover constituting the inertia locking system in Fig. 2;
Fig. 4 is a side elevational view showing a main portion constituting the inertia locking system in Fig. 2;
Fig. 5 is a front elevational view showing a state in which a stand leg portion is locked by the inertia locking system in Fig. 2;
Fig. 6a is a side cross sectional view of the stand leg portion retaining the latch in the inertia locking system in Fig. 2;
Fig. 6b is a cross sectional view showing the stand leg portion in Fig. 6a in an axial direction;
Fig. 7 is a schematic view showing the inertia locking system in Fig. 2 in a locked state;
Fig. 8 is a schematic view showing a collapsible seat provided with the inertia locking system in accordance with the present invention in a folded state;
Fig. 9 is a schematic view showing a collapsible seat in accordance with a general embodiment;
Fig. 10 is a schematic view showing an inertia locking system provided in the collapsible seat in Fig. 9; and
Fig. 11 is a schematic view showing the inertia locking system in Fig. 10 in a locked state.

### EMBODIMENT FOR CARRYING OUT THE INVENTION

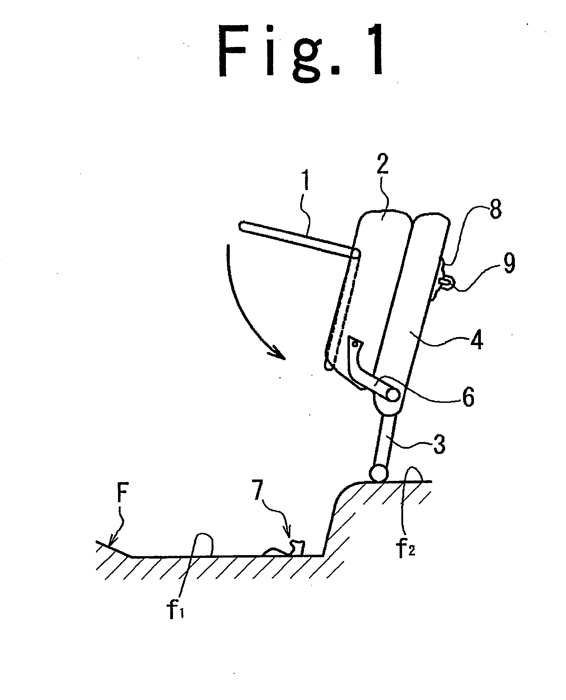

A description will be given below of an embodiment with reference to Figs. 1 to 8. In the illustrated embodiment, there is provided a stand leg portion 1 as shown in Fig. 1, there is shown a collapsible seat constituted by a seat cushion 2 capable of being jumped up and a seat back 4 as a particular embodiment, and an inertia locking system 7 is provided as a lock mechanism for preventing the seat cushion 2 from being jumped up. The collapsible seat has the same structure as that of the seat shown in Fig. 9. As well as the collapsible seat, in the inertia locking system, constituting parts in common with the parts shown in Fig. 10 will be described by using the same reference numerals.

In the structure of the collapsible seat, as the stand leg portion 1, there is provided with a structure obtained by curving a metal pipe in an upward substantially reverse-C shape. The stand leg portion 1 is provided so as to be freely folded by axially supporting and connecting axial ends in both vertical line portions to portions close to both lower sides of the seat cushion 2 by a supporting shaft (not shown). As a curved arm 6, there is provided a structure obtained by forming a side axially supported and connected to a side portion of the seat back 4 from a side fixed to a side portion of the seat cushion 2 in an obliquely curved substantially C shape in correspondence to an angle of incline of the seat back 4.

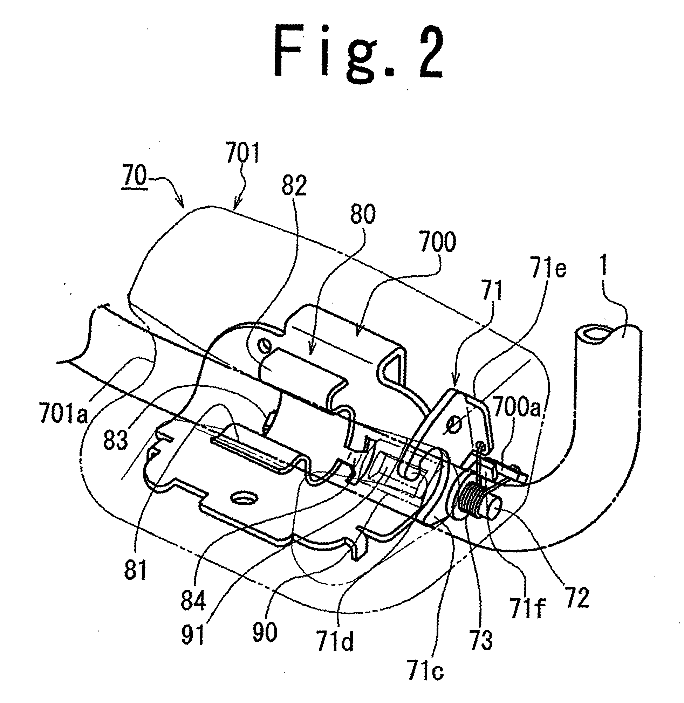

The inertia locking system 7 is provided with a pedestal 70 receiving a lower line portion of the stand leg portion 1 by a receiving port and a latch 71 pushing in and holding the lower line portion of the stand leg portion 1 inserted to the receiving port in the pedestal by an upper curved portion, the latch 71 is stood up from the pedestal 70 so as to be pivoted to the pedestal 70 by a pivot pin 72 inserted to a portion close to a latch base portion, and a torsion coil spring 73 is arranged between the latch 71 and the pedestal 70 so as to be fitted onto an axis of the pivot pin 72, as shown in Fig. 2, whereby the inertia locking system 7 is assembled.

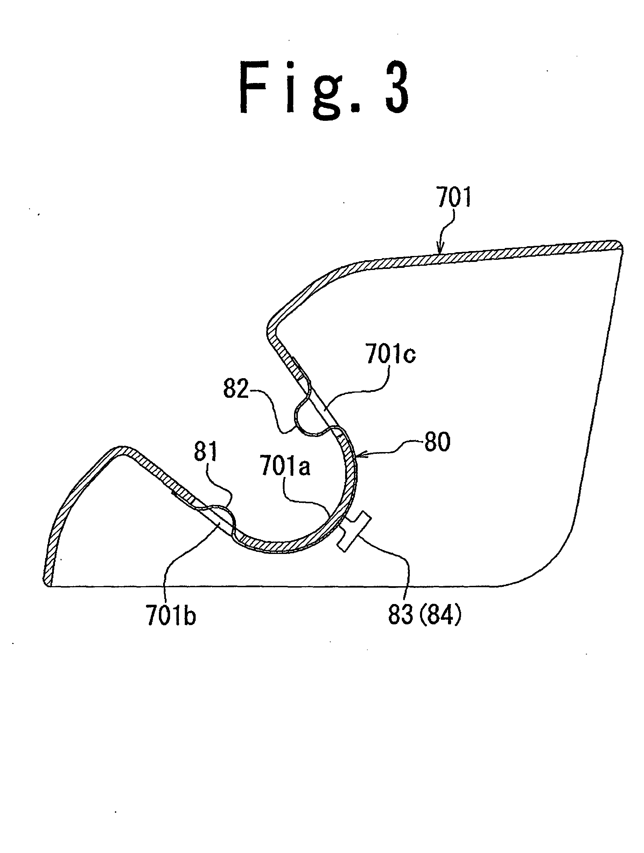

In the structure of the inertia locking system 7, the pedestal 70 has a metal placing plate 700 provided with the latch 71 in a standing manner as a base table, and is constituted by the placing plate 700 and a resin exterior packaging cover 701 covering the placing plate 700. In this pedestal 700, as shown in Fig. 3, a receiving port 701a receiving the lower end portion of the stand leg portion 1 is open toward an obliquely upper side, and is provided in the exterior packaging cover 701 so as to form a substantially U-shaped recess portion in which an inner bottom is formed in a curved manner.

A substantially Ω-shaped clip 80 is applied and fixed to a back side of the receiving port 701a in the exterior packaging cover 701 by aligning the open port with the receiving port 701a and exposing curl portions 81 and 82 to an inner side of slits 701b and 701c of the recess portion 701a. This clip 80 is provided so as to securely receive the lower line portion of the stand leg portion 1 up to an inner bottom of the recess portion 701a, and fix the exterior packaging cover 701 to the placing plate 700 by providing retainer hooks 83 and 84 (refer to Fig. 2) in both sides.

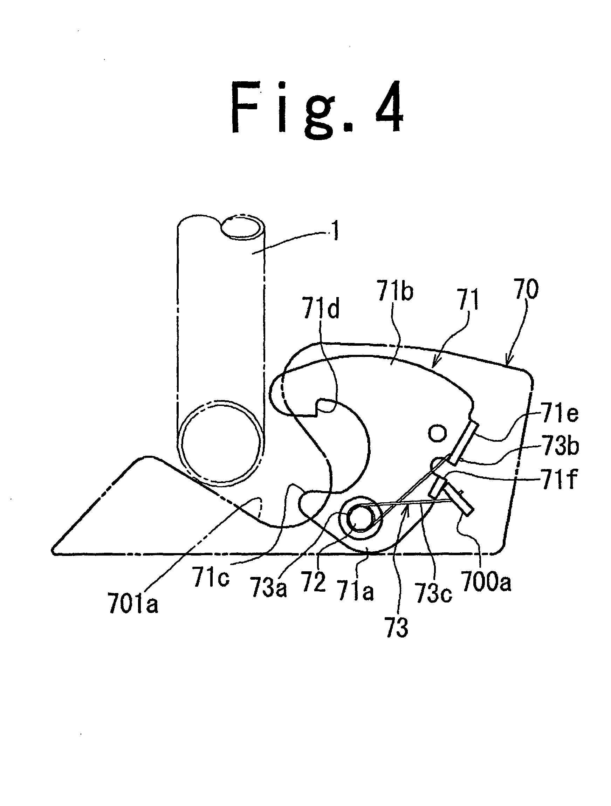

As the latch 71, there is provided a structure formed by a latch base portion 71a pivoted to the pedestal 70 by the pivot pin 72, an upper curved portion 71b pushing in and holding the lower line portion of the stand leg portion 1 inserted to the receiving port 701a of the pedestal 70, a jaw portion 71c projecting out from the latch base portion 71a so as to protrude from a bottom line of the receiving port 701a within the port, and a hook portion 71d projecting out from the upper curved portion 71b into an inner side of the curved portion, as shown in Fig. 4.

The latch 71 is provided in a standing manner in the placing plate 700 by the pivot pin 72 inserted to a stand-up flange (not shown) of the placing plate 700 from a portion close to the latch base portion 71a.

The torsion coil sprig 73 is arranged between a projection piece 71e and a projection piece 700a so as to support the latch 71 in such a manner as to bias the latch 71 to a moving apart direction at the rear of the receiving port 700a of the pedestal 70 by fitting a center coil portion 73a onto an axis of the pivot pin 72, retaining one spring end 73b with the projection piece 71e projecting out from the latch 71 and retaining another spring end 73c with the projection piece 700a protruding out from the placing plate 700. In this case, a stopper piece 71f brought into contact with the projection piece 700a of the placing plate 700 at a time of moving apart to a rear side is provided in the latch 71.

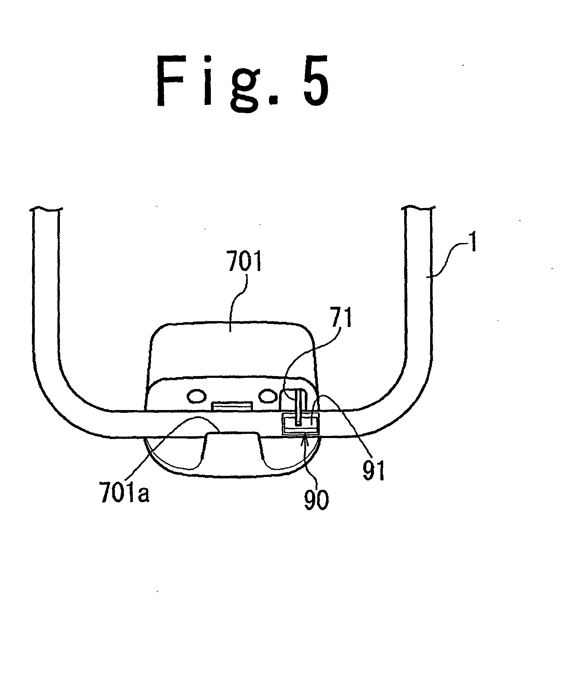

With respect to the latch 71, a receiving groove 91 engaging the hook portion 71d of the latch 71 is provided in the stand leg portion 1 by inserting a block 90 made of a sintered hard metal within an axis of the lower line portion, as shown in Fig. 5.

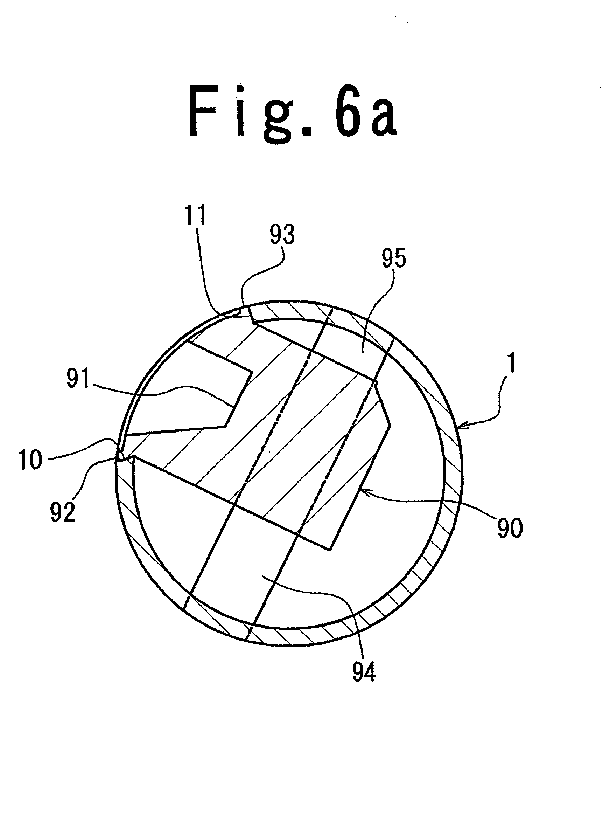

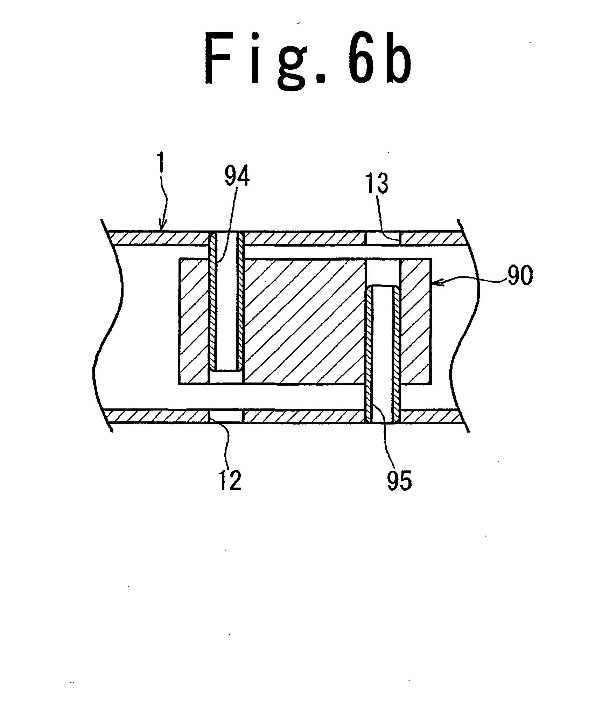

The metal block 90 is fitted within an open hole by forming open hole edges 10 and 11 provided in the lower line portion of the stand leg portion 1 by a slant surface which becomes narrow toward an inner side of diameter and providing projection edges 92 and 93 engaged with the slant surfaces of the open hole edges 10 and 11, as shown in Fig. 6a. Further, it is mounted and fixed to the lower line portion of the stand leg portion 1 by pressure inserting supporting pins 94 and 95 into the metal block 90 from two retainer holes 12 and 13 passing through the lower line portion of the stand leg portion 1, as shown in Fig. 6b.

In the collapsible seat provided with the inertia locking system structured in the manner mentioned above, when moving the lower line portion of the stand leg portion 1 within the port of the receiving port 701a in order to place the seat cushion 2 in a standing manner by the stand leg portion 1, at first, the lower line portion of the stand leg portion 1 is brought into contact with the jaw portion 71c so as to operate the latch 71 in such a manner as to immediately move a position of center of gravity corresponding to a fixing point of the spring end 73b of the torsion coil spring 73 to a front side by the torsion coil spring 73 due to an inertia force, because the jaw portion 71c is positioned so as to project in a direction of bottom line of the receiving port 701a rather than the latch base portion 71a as shown in Fig. 4.

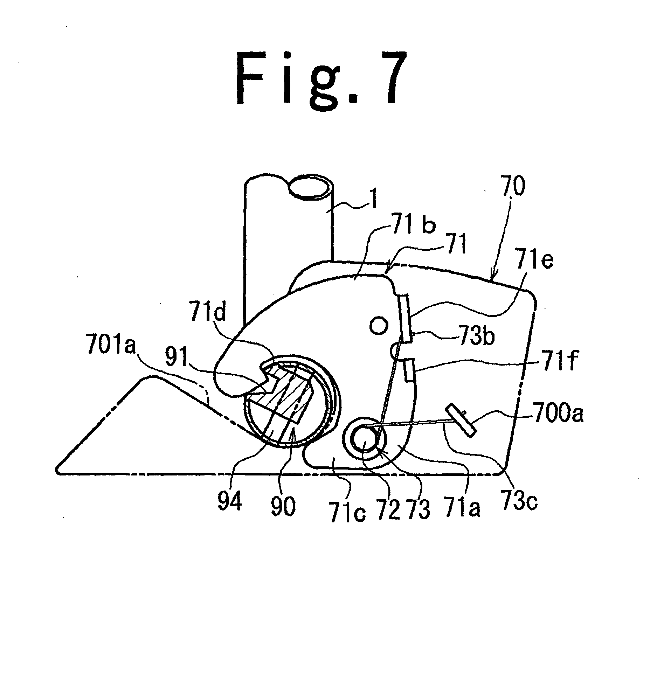

On the basis of the operation of the latch 32, as well as the latch 71 presses the upper curved portion of the stand leg portion 1 from an upper side by the upper curved portion 71b at the same time of receiving the lower line portion of the stand leg portion 1 to the inner portion of the receiving port 701a as shown in Fig. 7, the hook portion 71d of the latch 71 is engaged with the receiving groove 91 of the metal block 90, whereby it is possible to securely lock the stand leg portion 1 with the inner portion of the receiving port 701a.

Prior to this, at a time of receiving the lower line portion of the stand leg portion 1 to the inner portion of the receiving port 701a, the curl portions 81 and 82 of the clip 80 form a guide, and quickly guides the lower line portion of the stand leg portion 1 in the innermost recess of the receiving port 701a.

At a time of taking out the stand leg portion 1 from the inertia locking system 7, the stand leg portion 1 moves along the curved surface of the upper curved portion 71b in the latch 71 on the basis of a lift-up operation of the seat cushion 2 applied by an operator, so that the latch 71 is operated by the torsion coil spring 73 so as to move the position of center of gravity corresponding to the fixing point of the spring end 73b in the torsion coil spring 73 to a rear side, thereby being automatically returned to the original state of being supported so as to be biased by the torsion coil spring 71 in the moving apart direction at the rear of the receiving port 701a of the pedestal 70.

Accordingly, as well as it is possible to immediately lock the stand leg portion 1 so that the seat cushion 2 does not jump up at a time of collision or the like, there is no troublesome matter in view of usability for canceling the lock of the inertia locking system 7. Further, since the latch 71 is together operated at pleasure accompanying with attaching and detaching the stand leg portion 1, it is possible to prevent the matter that the latch 71 can not rotate due to the foreign materials attached around the axis of the pivot pin 72 from being generated.

In addition, since the receiving groove 91 is formed by the sintered hard alloy metal block 90, the matter that the receiving groove 91 is worn out is not generated, even when the latch 71 is frequently operated and the hook portion 71d is engaged with the receiving groove 91 of the stand leg portion 1. Further, since a whole of the inertia locking system 7 is covered with the resin exterior packaging cover 701, it is possible to keep an appearance good.

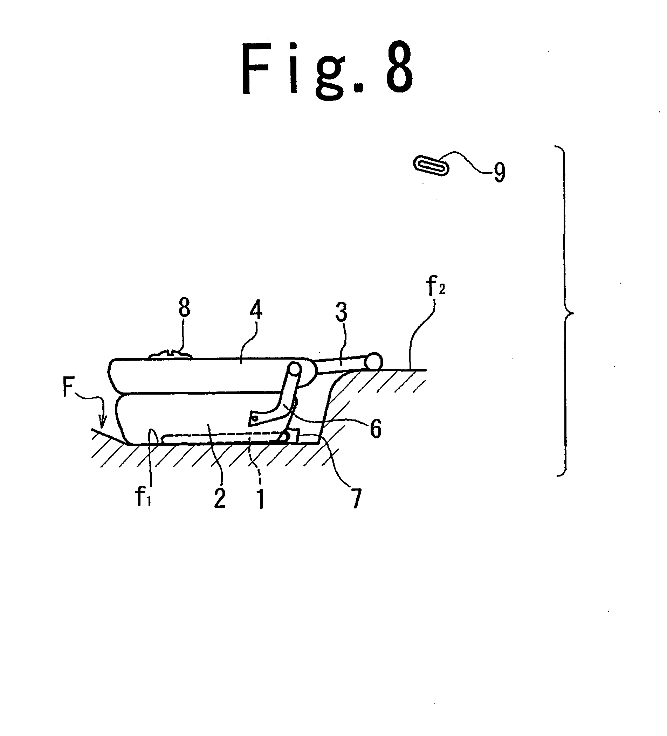

The collapsible seat mentioned above can be folded and received by folding the stand leg portion 1 so as to overlap with the bottom portion of the seat cushion 2, reclining the seat cushion 2 to the lower step portion f₁ of the vehicle body floor F and overlapping the seat back 4 on the seat cushion, as shown in Fig. 8. At this time, since the lower line portion of the stand leg portion 1 is gripped by the inertia locking system 7, it is possible to stably mount the whole of the seat to the lower step portion f₁ of the vehicle body floor F.

In this case, the description is given of the embodiment mentioned above in the case that the inertia locking system is provided in the collapsible seat, however, the structure is not limited to this collapsible seat, and the inertia locking system can be widely applied to a mechanism for gripping and holding various kinds of locked members.

In the above description, terms and expressions used in the present specification are only employed for simply describing, and do not limit the contents of the present invention. If there are used restrictive terms and expressions, they do not intend to exclude equivalent structures to the present embodiment mentioned above or a part thereof. Accordingly, various modifications can be added within the scope of the present claimed invention.

## Claims

1. An inertia locking system comprising:
a pedestal in which a substantially U-shaped receiving port receiving a locked member is open toward an obliquely upper side;
a latch pushing in and holding the locked member inserted to the receiving port of the pedestal by an upper curved portion;
the latch being stood up from the pedestal and being pivoted to the pedestal by a pivot pin inserted to a portion close to a latch base portion;
a torsion coil spring arranged between the latch and the pedestal so as to be fitted onto an axis of the pivot pin; and
the latch being supported so as to be biased in a moving part direction at the back of the receiving port of the pedestal by the torsion coil spring,
wherein the apparatus is provided with a jaw portion projecting from said latch base portion so as to protrude from a bottom line of the receiving port within the receiving port, and a hook portion protruding from the upper curved portion to an inner side thereof, the locked member inserted to the receiving port of the pedestal kicks the jaw portion so as to engage the hook portion with a receiving groove of the locked member, and the latch pushing in and holding the locked member by the upper curved portion is provided.

2. An inertia locking system according to claim 1, wherein the latch is frequently operated by providing with the latch engaging the hook portion with the receiving groove made of a sintered hard alloy and inserted and attached to the locked member.

3. An inertia locking system according to claim 1, wherein an open port is aligned with the receiving port of the pedestal and a substantially Ω-shaped clip is provided in the pedestal.

4. An inertia locking system according to claim 3, wherein a metal placing plate in which the latch is provided in a standing manner is set to the pedestal, a substantially U-shaped recess portion is provided as the receiving port for the locked member, the curl portion of the open port is exposed to an inner side rather than a slit in the recess portion so as to fix the clip to an inner side, the latch is protruded to an outer side from the slit, and a resin exterior packaging cover covering the placing plate is provided.

5. A collapsible seat comprising:
a seat cushion provided with an upward substantially C-shaped stand leg portion capable of being stood on a lower stage portion surface of a vehicle body floor in a lower portion close to a front side;
a forward tiltable seat back having a lower portion side pivoted and placed to an upper step portion of the vehicle body floor;
the seat cushion being axially supported and connected to a portion close to a lower side of a side portion of the seat back by a bracket arm extending to a rear portion side; and
the seat cushion including the stand leg portion being provided so as to be capable of being jumped up by the bracket arm,
wherein the seat is provided with a pedestal in which a substantially U-shaped receiving port receiving a lower line portion of the stand leg portion is open toward an obliquely upper side, and an inertia locking system which is provided with a jaw portion projecting from the latch base portion so as to protrude from a bottom line of the receiving port within the receiving port, and a hook portion protruding from the upper curved portion to an inner side thereof, and in which the lower line portion of the stand leg portion inserted to the receiving port of the pedestal kicks the jaw portion so as to engage the hook portion with a receiving groove of the stand leg portion, and the latch pushing in and holding the lower line portion of the stand leg portion by the upper curved portion is provided, the latch is stood up from the pedestal and is pivoted to the pedestal by a pivot pin inserted to a portion close to a latch base portion, a torsion coil spring is arranged between the latch and the pedestal so as to be fitted onto an axis of the pivot pin, and the latch is supported so as to be biased in a moving part direction at the back of the receiving port of the pedestal by the torsion coil spring, is provided in a lower stage portion of the vehicle body floor.

6. A collapsible seat according to claim 5, wherein there is provided with the inertia locking system which is provided with the latch engaging the hook portion with the receiving groove made of a sintered hard alloy and inserted and attached to the lower line portion of the stand leg portion.

7. A collapsible seat according to claim 5, wherein there is provided with the inertia locking system in which an open port is aligned with the receiving port of the pedestal and a substantially Ω-shaped clip is provided in the pedestal.

8. A collapsible seat according to claim 7, wherein there is provided with the inertia locking system structured such that a metal placing plate in which the latch is provided in a standing manner is set to the pedestal, a substantially U-shaped recess portion is provided as the receiving port for the stand leg portion, there is provided with a resin exterior packaging cover in which the curl portion of the open port is exposed to an inner side rather than a slit in the recess portion so as to fix the clip to an inner side, the latch is protruded to an outer side from the slit of the exterior packaging cover, and the placing plate is covered by the exterior packaging cover.
